# EUROPEAN PATENT SPECIFICATION

(11) **EP 0 707 220 B1**
(45) Date of publication and mention of the grant of the patent: **05.06.2002**
(21) Application number: 95307007.5
(22) Date of filing: 03.10.1995
(51) Int. Cl.: G01S 13/93, G01S 13/34, G01S 7/03

(54) **Radar module and radar system**
Radarmodul und Radarsystem
Module radar et système radar

(30) Priority: 13.10.1994 JP 27458694
(43) Date of publication of application: 17.04.1996
(73) Proprietor: HONDA GIKEN KOGYO KABUSHIKI KAISHA, Minato-ku, Tokyo 107 (JP)
(72) Inventor: Singyoji, Masahito, c/o Honda R&D Co., Ltd., Wako-shi, Saitama-ken (JP); Urabe, Masanobu, c/o Honda R&D Co., Ltd., Wako-shi, Saitama-ken (JP)
(74) Representative: Tothill, John Paul

(56) References cited:
- EP-A- 0 474 393
- EP-A- 0 531 877
- EP-A- 0 535 780
- GB-A- 2 137 449
- US-A- 5 008 678
- INTERNATIONAL MICROWAVE SYMPOSIUM DIGEST (MTT-S), ALBUQUERQUE, JUNE 1 - 5, 1992, vol. 2, 1 June 1992, REID D W, pages 721-724, XP000343421 WILLIAMS D A: "MILLIMETRE WAVE RADARS FOR AUTOMOTIVE APPLICATIONS"

## Description

The present invention relates to a vehicle-mounted radar system and radar modules constituent thereof, and in particular to a small-sized and low production cost radar module.

A car-mounted radar system mounted on a car, such as a passenger car, is utilized in combination with an alarm device or display device for collision avoidance. In such a car-mounted radar system, detection over a short distance on the order of tens of centimetres is required in order to warn of for example a rear-end impact over a short distance between cars during traffic congestion, or of near collisions when putting a car into a garage. In such cases, FM radar is more suitable than pulse radar. Also, in miniaturizing a module, it is preferable to use millimetre electromagnetic waves of high frequency. Such a millimetre wave FM radar system is disclosed in the specifications of United States patents 5,181,037, 5,229,774 and EP-A-0,474,393 and EP-A-0,535,780. Claim 1 is characterised over EP-A-0,535,780.

Generally, in an FM radar system, the frequency of a beat signal is arranged to rise in proportion to the distance to an object reflecting the wave. Accordingly, for shorter distances to an object, the frequency of a beat signal lowers and becomes undetectable due to 1/f noise which is generated in a mixer. In an FM radar system according to the prior art mentioned above, the effect of 1/f noise is reduced by raising the frequency of the beat signal, by employing a heterodyne method for modifying the frequency of a local signal, or by using a delay line.
A heterodyne method requires a local oscillator used for frequency conversion and accordingly is expensive, whereas the use of a delay circuit, such as is described in GB-A-2 137 449, increases the size of the radar module.

Furthermore, an FM radar system according to the prior art mentioned above is arranged to switch a transmitter step multiplier, a circulator, antennas used in common for transmission and reception, a mixer and a receiver step multiplier, which constitute each FM radar module, by a synchronous operation between a transmitter side switch and a receiver side switch. Thus, as many transmitter-receiver sections as antennas are necessary, thereby increasing the number of parts so that the whole FM module is not only large in size but production costs are also increased considerably.

A radar module according to the present invention, comprises a planar array antenna, and a transmitter-receiver section for supplying a signal to be radiated by said planar array antenna and receiving a receive signal from the planar array antenna, characterized in that said transmitter-receiver section is disposed on the rear side of said planar array antenna and in that a signal delay section is inserted between said planar array antenna and said transmitter-receiver section, said signal delay section being disposed on the rear surface of said planar array antenna and including a delay line.

According to a preferred embodiment of the present invention, said planar array antenna comprises a plurality of antenna portions used in common for transmission and reception, and a selective connection section for selectively connecting each of these antenna portions via said delay line to said transmitter-receiver section.

A delay line implemented with a microstrip line or the like may be provided for improving detection at close quarters by seemingly moving an obstacle to be detected to the front of the car and raising the frequency of a beat signal. This delay line needs to be typically as long as tens of centimetres. By employing a fold back structure, such as a meander line, and a spiral structure, shortening the length of a delay line is performed but is limited in itself. According to the present invention, the size is greatly reduced by placing a delay line between a planar array antenna and a transmitter-receiver section in built layers rather than by placing a delay line in the same plane as with a planar array antenna and a transmitter-receiver section. According to a preferred embodiment of the present invention, a low-loss resin waveguide newly developed by the present inventor is employed as a delay line.

According to a more preferred embodiment of the present invention, a plurality of antenna portions used in common for transmission and reception are selectively connected to a transmitter-receiver section under the control of a selective connection section. Accordingly, one transmitter-receiver section, including an amplifier, circulator and mixer, is enough for this and thus the number of parts and the space is greatly reduced.

Embodiments of the present invention will now be described, by way of example only, with reference to the accompanying drawings, in which:
FIG. 1 is a sectional view showing the configuration of an FM radar module according to one embodiment of the present invention;
FIG. 2 is a plan view showing the constitution of each layer of the FM radar module shown in FIG. 1 (A showing the planar array antenna PA; B showing the delay section DL; and C showing the transmitter-receiver section TR);
FIG. 3 is a block diagram showing one example of a typical FM radar system including FM radar modules as shown in FIGS. 1 and 2;
FIG. 4 is a plan view showing the planar array antenna PA in the top layer shown in FIGS. 1 and 2 (A);
FIG. 5 is a sectional view showing one example of a resin waveguide constituting the delay section DL in the intermediate layer shown in FIGS. 1 and 2(B);
FIG. 6 is a conceptual drawing showing one example of beam patterns B1 to B4 of electromagnetic waves radiated from each of the antenna portions A1 to A4 shown in FIG. 3; and
FIG. 7 is a conceptual drawing showing the disposition and one example of a beam pattern of four radar modules LM1 to LM4 included in the car-mounted FM radar system shown in FIG. 3.

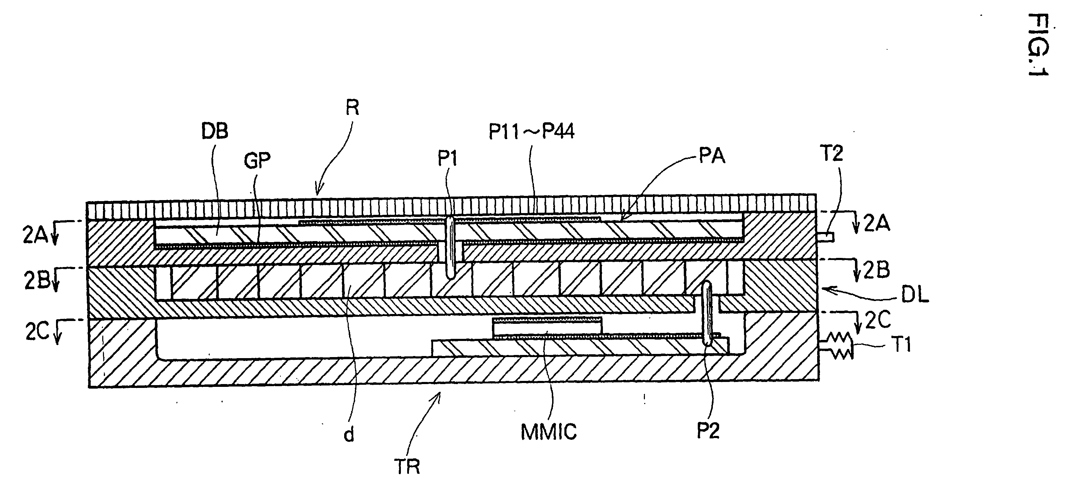

FIG. 1 is a sectional view showing the configuration of an FM radar module according to one embodiment of the present invention. This FM radar module is so constructed that a planar array antenna PA commonly used for transmission and reception and a transmitter-receiver section TR for supplying an FM signal to be radiated from this planar array antenna and for receiving a reflected signal, are vertically layered via a signal delay section DL in an intermediate layer on which a delay line d is formed. An input signal to or an output signal from an MMIC (monolithic microwave integrated circuit) of the transmitter-receiver section TR is input or output through a terminal T1. An input signal for scanning a beam is input to a terminal T2, by which the planar array antenna PA is controlled. The planar array antenna PA has a plurality of patches P11 to P44 provided on the surface of a dielectric board DB. On the rear face of the dielectric board DB, a grounding metal GP is formed. The planar array antenna PA is protected with a radome R from the external environment.

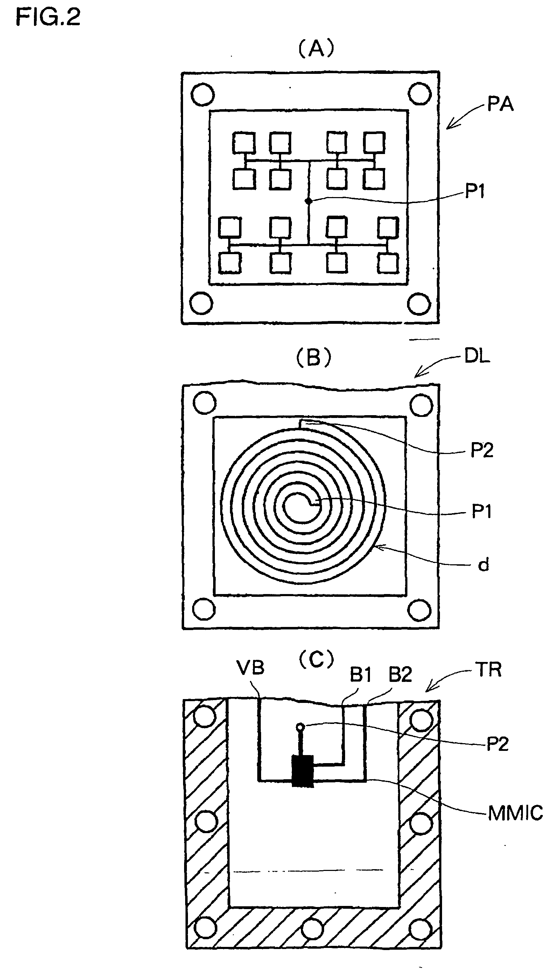

The planar array antenna PA (the top layer of the layered block), the delay section DL (the intermediate layer), and the transmitter-receiver section TR (the bottom layer) are constructed as shown in the respective plan views of FIGS. 2 (A), (B), and (C). Between the planar array antenna PA of the top layer and one terminal of the delay line d forming the signal delay section DL of the intermediate layer, a high frequency connection is achieved via a pin P1. Between the other terminal of the delay line d and the transmitter-receiver section TR of the bottom layer, a high frequency connection is achieved via a pin P2.

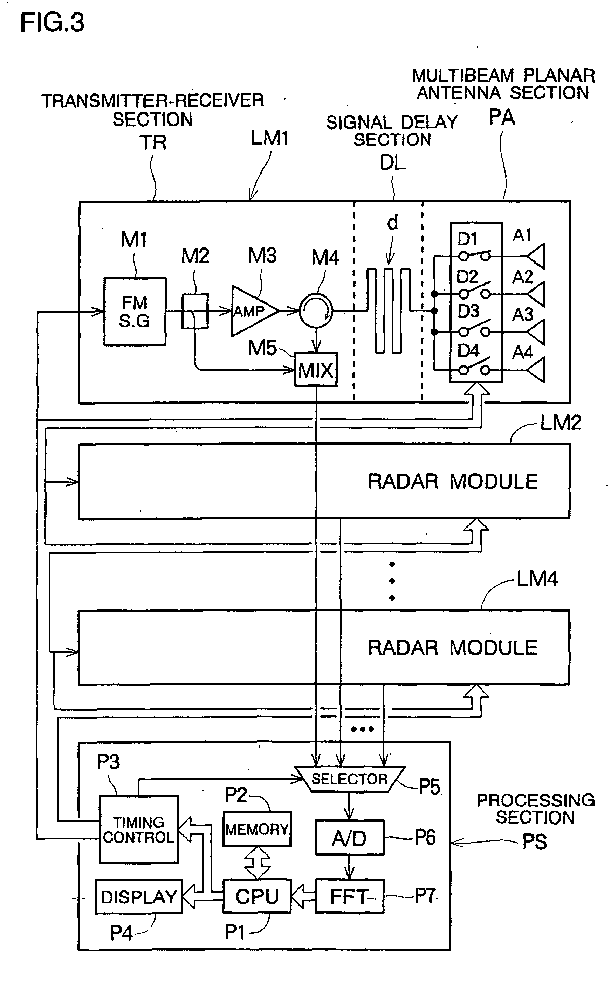

The FM radar module according to the embodiment shown in FIGS. 1 and 2 may correspond, for example, to one of four FM radar modules LM1 to LM4 constituting a car-mounted FM radar system shown in the block diagram of FIG. 3. The car-mounted FM radar system shown in FIG. 3 comprises four FM radar modules LM1 to LM4 and a processing section block PS for controlling each FM radar module, for processing a signal including obstacle information, and for issuing an alarm. As represented by FM radar module LM1, each of the FM radar modules LM1 to LM4 comprises a transmitter-receiver section TR, including an FM signal generator M1, in the bottom layer, a signal delay section DL, including a delay line d, in the intermediate layer, and a multibeam planar antenna section PA, including four antenna portions A1 to A4, in the top layer.

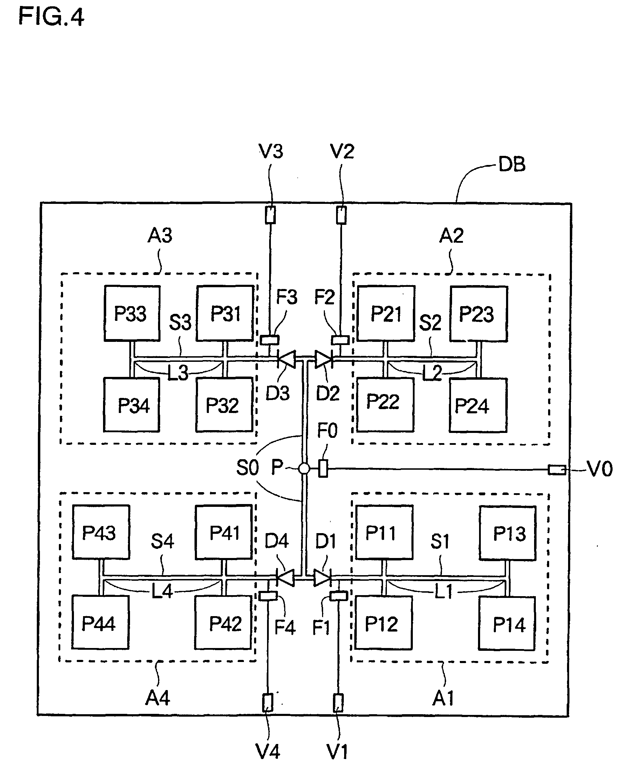

As shown in the enlarged plan view of FIG. 4, the planar array antenna PA in the top layer, includes sixteen patches P11 to P44 of rectangular shape arranged on the dielectric board DB on the rear face of which a grounding metal is formed. At the centre of the dielectric board DB, a power section P corresponding to the tip part of the pin P1 is formed. A supply line SO, S1 to S4 of microstrip type for connecting this power section P and each patch is formed on the dielectric board DB. The sixteen patches P11 to P44 form four antenna portions A1, A2, A3, and A4 for radiating beams of different tilt angles set in accordance with a difference in the length of the supply lines to them.

The right lower antenna portion A1 comprises two left patches P11, P12 of the same supply line length measured from the power section P, and two right patches P13, P14 of a supply line length longer by L1 than the two left patches, P11, P12. The right upper antenna portion A2 comprises two left patches P21, P22 of the same supply line length measured from the power section P, and two right patches P23, P24 of a supply line length longer by L2 than the two left patches P21, P22.

Similarly, the left upper antenna portion A3 comprises two right patches P31, P32 of the same supply line length measured from the power section P, and two left patches P33, P34 of a supply line length longer by L3 than the two right patches P31, P32. The left lower antenna portion A4 comprises two right patches P41, P42 of the same supply line length measured from the power section P, and two left patches P43, P44 of a supply line length longer by L4 than the two right patches P41, P42.

Power supply from the power section P to the antenna portion A1 is performed through microstrip supply lines S0 and S1, while power supply from the power section P to the antenna portion A2 is performed through supply lines S0 and S2. Power supply from the power section P to the antenna portion A3 and to the antenna section A4 is performed through supply lines S0 and S3 and through supply lines S0 and S4, respectively.

Between the supply line SO and the individual supply lines S1 to S4, are provided respective PIN diodes D1, D2, D3 and D4 excellent in high frequency characteristics. A bias circuit for each PIN diode is formed including bias input terminals V0 and V1 to V4, and low-pass filters F0 and F1 to F4 on the dielectric board DB. That is, a positive voltage is always applied to a common bias input terminal V0, while either a higher positive voltage than that applied to the terminal V0 or ground (zero) voltage is selectively applied to each of the bias input terminals V1 to V4. This selective voltage is supplied from a timing control circuit P3 in the processing section PS of FIG. 3 through a terminal T2 of FIG. 1. When ground voltage is applied to any of the bias input terminals V1 to V4, the corresponding one of the PIN diodes D1 to D4 becomes conductive so that the supply line SO and the corresponding one of the supply lines S1 to S4 are electrically connected and thus high frequency power is supplied from the power section P to the corresponding one of the antenna portions A1 to A4.

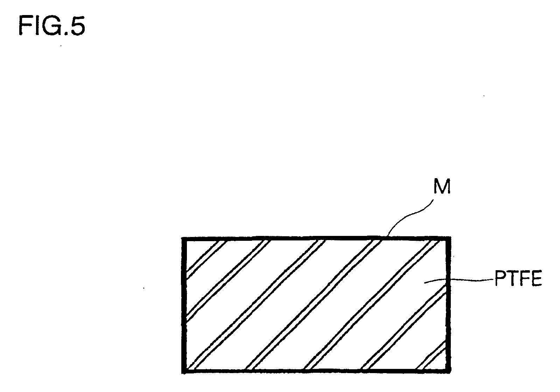

The delay line d, constituting a signal delay section DL in the intermediate layer of the FM radar module, comprises a resin waveguide of spiral shape. This resin waveguide has been newly made by the inventors for an FM radar module according to the present embodiment on an experimental basis, and has a sectional shape shown in FIG.5. The resin waveguide is made of polytetrafluoroethylene (PTFE), has a rectangular section and comprises metal foil deposited on the surface of a rod-shaped dielectric line by plating. The aspect ratio of the section of the dielectric line is approximately 1:2, and when the frequency of an FM signal to be delayed is 60 GHz, the transverse width is 3.8 mm, smaller than that needed by a normal waveguide (5.8 mm). Because of being smaller in size than a normal waveguide and elastic, this resin waveguide has advantages in that a delay line of still smaller size can be implemented with a high density winding.

The passing loss in this resin waveguide is approximately 3 dB/m in a straight line when the signal frequency is 60 GHz. However, bending at a small radius of curvature increases the passing loss to on the order of 4 dB/m. This value of passing loss is greater than a value of a waveguide without dielectric loss (approximately 1.2 dB/m), but rather smaller than a value of a microstrip line (approximately 7 dB/m). The feature of a resin waveguide, formed by depositing metal foil on the surface of a rod-like body made of polytetrafluoroethylene (PTFE) or the like, is its elasticity and accordingly its delay time can be made longer by implementing a longer dielectric line in a dense spiral shape as shown in FIGS. 1 and 2(B). Incidentally, since the passing loss increases with smaller radius of curvature, employing a helical structure in which all parts are of the same radius of curvature enables a reduction in passing loss in place of a spiral structure in which the radius of curvature decreases for the inner part.

As represented by the transmitter-receiver section LM1 in FIG. 3, the transmitter-receiver section TR, in the bottom layer, comprises an FM signal generation circuit M1, a directional coupler M2, an amplifier M3, a circulator M4, and a mixer M5. As shown in FIG. 2(C), this transmitter-receiver section TR is made as a monolithic microwave integrated circuit (MMIC) and housed in a package. An FM signal is input to or output from this package through the pin P2, a timing signal or connection control instruction is input from the processing section PS in FIG. 3 through signal lines B1, B2, and DC operational power is supplied through a power supply line VB. Incidentally, as for a circulator M4, which is relatively difficult to be made into a MMIC, a construction of hybrid microintegration may be employed by omitting it from the objects of the MMIC and attaching it to the outside of other parts made into the MMIC.

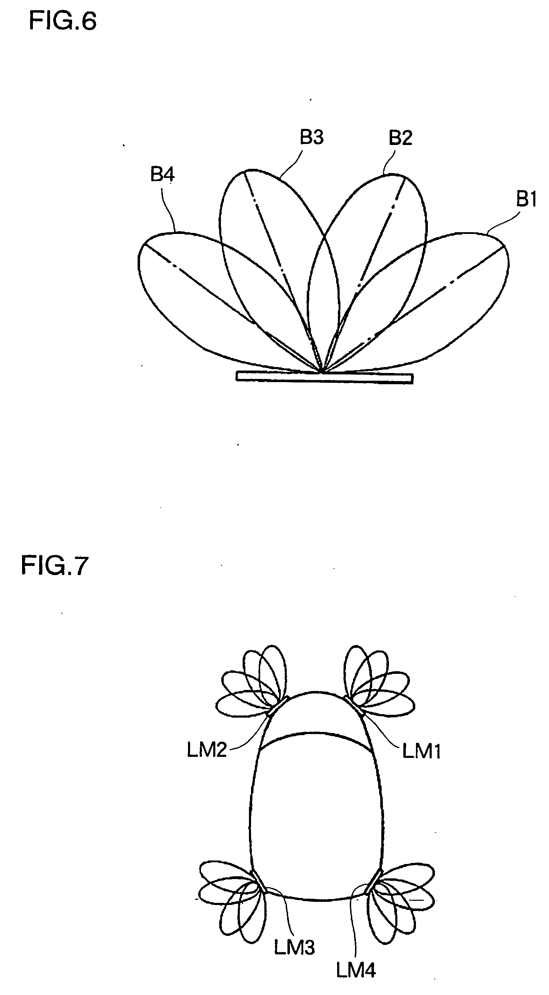

As the antenna sections A1 to A4 of each FM radar module have mutually different tilt angles, they radiate four beams B1 to B4 of different directions as shown in FIG.6. Thus, if one of the four beams B1, B2, B3 and B4 is radiated in sequence for a predetermined period from one of the four antenna portions A1, A2, A3 and A4 by making one of the four PIN diodes D1, D2, D3 and D4 conductive in the same sequence for a predetermined period, and if each wave reflected from an object is propagated along a reverse route to the power section P, then beam scanning is carried out in the four different directions with these planar array antennas. Each of the radar modules LM1 to LM4 is installed on the four corners of a car as shown in FIG. 7, with the processing section PS installed at an appropriate position in the car.

Referring to FIG. 3, an FM signal generator M1 in the FM radar modules LM1 to LM4 generates an FM signal whose frequency changes for a predetermined period in a sawtooth form in response to timing control signals received from the timing control circuit P3 of the processing section PS. Part of the generated FM signal is supplied through the directional coupler M2, amplifier M3, and circulator M4 to the multibeam planar array antenna PA, propagates through one of PIN diodes D1 to D4 to be turned ON/OFF in response to a control signal received from the timing control circuit P3 in the processing section PS, and is radiated from the corresponding one of the antenna portions A1 to A4 to the outside of a car. An FM signal radiated from an antenna portion and reflected from an object is received by the corresponding antenna portion and supplied through the delay line d constructed using a resin waveguide and through the circulator M4 to one input terminal of the mixer M5.

To the other terminal of the mixer M5, part of the FM signal generated in the FM signal generator M1 is supplied through the coupler M2. Thus, the mixer M5 outputs a beat signal whose frequency increases in accordance with the distance to the object generating the reflected wave. The respective beat signal output from each of FM radar modules LM1 to LM4 is supplied to the selector P5 in the processing section PS. The beat signals are selectively supplied to an A/D conversion circuit P6 in a time sharing method by the selector P5 in accordance with a radar module specifying signal supplied from the timing control circuit P3. A beat signal selected by the selector P5 is converted by the A/D convertor P6 into a digital signal. The beat signal converted into a digital signal is divided into frequency spectra in a fast Fourier transform circuit (FFT) P7. A signal processing circuit P1 constructed using the CPU does not only detect information relating to an obstacle by referring to the frequency of the beat signal and compute the position of the obstacle and the relative velocity, but also judges the danger of the obstacle and displays information on the existence of the obstacle, the distance to the obstacle, danger and the like on a display P4. Incidentally, the signal processing circuit P1 can also generate a signal for controlling the accelerator and brake of the car.

Heretofore, a case of setting the tilt angles right-to-left was exemplified. However, setting the tilt angles front-to-back or setting the tilt angles right-to-left and front-to-back in combination is also possible.

Also, the case of each antenna portion comprising four patches was exemplified. However, according to need, for example, for sharpening the directional characteristic, each antenna portion can comprise a larger appropriate number of patches than four.

Furthermore, beam scanning by radiating an electromagnetic wave from only one of a plurality of antenna portions was described. However, the present invention is applicable to changing the synthetic directional characteristic by radiating electric waves from any two of the antenna portions.

Also, a structure of implementing a delay line for an FM signal by using a resin waveguide of small passing loss was exemplified. However, when an increase in passing loss is allowable, using a delay line of microstrip type or triplet type is also possible in place of a dielectric line.

Also, an FM radar module for radiating an FM signal was taken as an example for description of the present invention, but the present invention is applicable also to a pulse radar module for radiating a pulse signal.

As described in detail, a radar module according to the present invention presents a stereographic structure in which a planar array antenna commonly used for transmission and reception and a transmitter-receiver section are layered via an intermediate layer in which a delay line is formed, and thus has advantages in that the function of close distance detection can be implemented under a small-sized structure.

Also, according to a preferred embodiment of the present invention, a planar array antenna commonly used for transmission and reception comprises a plurality of antenna portions that can be selectively connected through the above delay line to the transmitter-receiver section. Thus, a single transmitter-receiver section is used in common with a plurality of antenna portions, so that the production cost is greatly reduced with a great decrease in the number of parts and miniaturization can also be implemented.

## Claims

1. A radar module including a planar array antenna (PA), and a transmitter-receiver section (TR) for supplying a signal to be radiated by said planar array antenna (PA) and receiving a receive signal from the planar array antenna (PA), **characterized in that** said transmitter-receiver section (TR) is disposed on the rear side of said planar array antenna (PA) and **in that** a signal delay section (DL) is inserted between said planar array antenna and said transmitter-receiver section, said signal delay section (DL) being disposed on the rear surface of said planar array antenna (PA) and including a delay line (**d**).

2. The radar module of Claim 1, wherein said planar array antenna (PA) comprises:
a plurality of antenna portions (A1-A4); and
a selective connection section (P1, P2) for selectively connecting each antenna portion (A1, A2, A3 or A4) through said delay line (**d**) to said transmitter-receiver section (TR).

3. The radar module of Claim 2, wherein said plurality of antenna portions (A1-A4) have different respective tilt angles.

4. The radar module of any of Claims 1 to 3, wherein said transmitter-receiver section (TR) comprises:
an FM signal generation circuit (M1) for generating FM signals to be radiated from said planar array antenna (PA); and
a mixer (M5) for mixing a receive signal from said planar array antenna (PA) with part of the FM signal generated in said FM signal generation circuit (M1) to generate a beat signal.

5. The radar module of any of Claims 1 to 4, wherein said delay line (**d**) comprises a waveguide in which a metal layer covers a dielectric of rectangular section.

6. The radar module of Claim 5, wherein said waveguide is formed in a spiral.

7. The radar module of claim 1, wherein the planar array antenna comprises a scan-type planar antenna, and the transmitter-receiver section comprises an MMIC (Monolithic Microwave IC) including a high-frequency signal generator and receiver (TR) for receiving a signal reflected from an object, and means (P1, P2) for supplying a high-frequency signal to the scan-type planar antenna (PA), wherein said scan-type planar antenna (PA) is disposed on a dielectric substrate (DB) for scanning a high-frequency signal, said MMIC is disposed on the rear side of said planar antenna (PA) with said dielectric substrate (DB) disposed therebetween, and said planar antenna (PA) and said high-frequency signal generator and receiver (TR) of said MMIC are connected together via said means (P1, P2) so that the high-frequency signal is supplied from the rear face of said planar antenna (PA) through said means (P1, P2); and wherein said signal delay section (DL) is inserted between said planar antenna (PA) and said MMIC and is disposed on the rear side of said planar antenna (PA), and includes said delay line (**d**) of the signal delay section (DL) for temporarily delaying a transmit or receive signal.

8. The radar module of Claim 7, wherein said scan-type planar antenna (PA) comprises a plurality of rectangular patches (P11-P14, P21-P24, P31-P34, P41-P44) disposed on the dielectric substrate (DB), and switch means (D1-D4) for selectively supplying a high-frequency signal to each of the patches (P11-P14, P21-P24, P31-P34, P41-P44).

9. The radar module of Claim 7 or 8, wherein said scan-type planar antenna (PA) is a time-sharing scan-type planar antenna.

## Patentansprüche

1. Radarmodul mit einer Planarantenne (PA) und einem Sender-Empfänger-Abschnitt (TR) zum Bereitstellen eines durch die Planarantenne (PA) abzustrahlenden Signals und zum Empfangen eines Empfangssignals aus der Planarantenne (PA), **dadurch gekennzeichnet, dass**
der Sender-Empfänger-Abschnitt (TR) auf der Rückseite der Planarantenne (PA) angeordnet ist, und dass ein Signalverzögerungsabschnitt (DL) zwischen die Planarantenne und den Sender-Empfänger-Abschnitt geschaltet ist, wobei der Signalverzögerungsabschnitt (DL) auf der hinteren Oberfläche der Planarantenne (PA) angeordnet ist und eine Verzögerungsleitung (d) enthält.

2. Radarmodul nach Anspruch 1, bei dem die Planarantenne (PA) umfasst:
eine Mehrzahl an Antennenabschnitten (A1 - A4); und
einen selektiven Anschlussabschnitt (P1, P2) zum selektiven Anschließen jedes Antennenabschnitts (A1, A2, A3 oder A4) durch die Verzögerungsleitung (d) an den Sender-Empfänger-Abschnitt (TR).

3. Radarmodul nach Anspruch 2, bei dem die Mehrzahl an Antennenabschnitten (A1 - A4) unterschiedliche jeweilige Neigungswinkel haben.

4. Radarmodul nach einem der Ansprüche 1 bis 3, bei dem der Sender-Empfänger-Abschnitt (TR) umfasst:
eine FM-Signalerzeugungsschaltung (M1) zum Erzeugen von FM-Signalen, die von der Planarantenne (PA) abzustrahlen sind; und
einen Mischer (M5) zum Mischen eines Empfangssignals aus der Planarantenne (PA) mit einem Teil des in der FM-Signalerzeugungsschaltung (M1) erzeugten FM-Signals, um ein Überlagerungssignal zu erzeugen.

5. Radarmodul nach einem der Ansprüche 1 bis 4, bei dem die Verzögerungsleitung (d) einen Wellenleiter umfasst, in dem eine Metallschicht ein Dielektrikum rechteckigen Querschnitts bedeckt.

6. Radarmodul nach Anspruch 5, bei dem der Wellenleiter zu einer Spirale ausgebildet ist.

7. Radarmodul nach Anspruch 1, bei dem die Planarantenne eine Planarantenne der abtastenden Art umfasst und der Sender-Empfänger-Abschnitt eine MMIC (monolithische integrierte Mikrowellenschaltung) mit einen Hochfrequenzsignalerzeuger und -empfänger (TR) zum Empfang eines von einem Gegenstand reflektierten Signals, und Einrichtungen (P1, P2) umfasst, um der Planarantenne (PA) der abtastenden Art ein Hochfrequenzsignal zur Verfügung zu stellen, bei dem die Planarantenne (PA) der abtastenden Art zum Abtasten eines Hochfrequenzsignals auf einem dielektrischen Substrat (DB) angeordnet ist, wobei die MMIC auf der Rückseite der Planarantenne (PA) mit dem dazwischen angeordneten dielektrischen Substrat (DB) angeordnet ist, und die Planarantenne (PA) und der Hochfrequenzsignalerzeuger und -empfänger (TR) der MMIC über die Einrichtungen (P1, P2) so zusammengeschaltet sind, dass das Hochfrequenzsignal von der Rückfläche der Planarantenne (PA) aus durch die Einrichtungen (P1, P2) zur Verfügung gestellt wird; und bei dem der Signalverzögerungsabschnitt (DL) zwischen die Planarantenne (PA) und die MMIC geschaltet und auf der Rückseite der Planarantenne (PA) angeordnet ist und die Verzögerungsleitung (d) des Signalverzögerungsabschnitts (DL) enthält, um ein Sendeoder Empfangssignal zeitweilig zu verzögern.

8. Radarmodul nach Anspruch 7, bei dem die Planarantenne (PA) der abtastenden Art eine Mehrzahl an rechteckigen Patchfeldem (P11 - P14; P21 - P24, P31 - P34, P41 - P44), die auf dem dielektrischen Substrat (DB) angeordnet sind, und Schalteinrichtungen (D1 - D4) umfasst, um jedem der Patchfelder (P11 - P14; P21 - P 24, P31 - P34, P41 - P44) selektiv ein Hochfrequenzsignal zur Verfügung zu stellen.

9. Radarmodul nach Anspruch 7 oder 8, bei dem die Planarantenne (PA) der abtastenden Art eine Timesharing-Planarantenne der abtastenden Art ist.

## Revendications

1. Un module radar comprenant une antenne à groupement plan dite antenne multi-éléments plane (PA) et une section d'émetteur-récepteur (TR) pour fournir un signal devant être irradié par ladite antenne à groupement plan (PA) et recevoir un signal de réception depuis l'antenne à groupement plan (PA), **caractérisé en ce que** ladite section d'émetteur-récepteur (TR) est disposée sur la face arrière de ladite antenne à groupement plan (PA), et **en ce qu'**une section de retard de signal (DL) est insérée entre ladite antenne à groupement plan et ladite section d'émetteur-récepteur, ladite section de retard de signal (DL) étant disposée sur la surface arrière de ladite antenne à groupement plan (PA) et incluant une ligne à retard (d).

2. Le module radar selon la revendication 1, dans lequel une antenne à groupement plan (PA) comprend :
une pluralité de parties d'antenne (A1 à A4); et
une section de connexion sélective (P1, P2) pour connecter sélectivement chaque partie d'antenne (A1, A2, A3 ou A4), par l'intermédiaire de ladite ligne à retard (d), à ladite section d'émetteur-récepteur (TR).

3. Le module radar selon la revendication 2, dans lequel ladite pluralité de parties d'antenne (A1 à A4) ont des angles d'inclinaison respectifs différents.

4. Le module radar selon l'une quelconque des revendications 1 à 3, dans lequel ladite section d'émetteur-récepteur (TR) comprend :
un circuit de génération de signal FM (M1) pour générer des signaux FM à irradier depuis ladite antenne à groupement plan (PA); et
un mélangeur (M5) pour mélanger un signal de réception venant de ladite antenne à groupement plan (PA) avec une partie du signal FM générée dans ledit circuit de génération de signal FM (M1) afin de générer un signal de battement.

5. Le module radar selon l'une quelconque des revendications 1 à 4, dans lequel ladite ligne à retard (d) comprend un guide d'onde dans lequel une couche métallique recouvre un diélectrique ayant une section rectangulaire.

6. Le module radar selon la revendication 5, dans lequel ledit guide d'onde est formé en une spirale.

7. Le module radar selon la revendication 1, dans lequel l'antenne à groupement plan comprend une antenne plane de type à balayage, et la section d'émetteur-transmetteur comprend un circuit intégré à Micro-onde Monolithique MMIC (Monolithic Microwave IC) incluant un générateur de signal haute fréquence et un récepteur (TR) pour recevoir un signal réfléchi depuis un objet, et des moyens (P1, P2) pour fournir un signal haute fréquence à l'antenne plane de type à balayage (PA), dans lequel ladite antenne plane de type à balayage (PA) est disposée sur un substrat diélectrique (DB) pour balayer un signal haute fréquence, ledit MMIC est disposé sur la face arrière de ladite antenne plane (PA) et ledit substrat diélectrique (DB) étant disposé entre eux, et ladite antenne plane (PA) et ledit générateur de signal haute fréquence et récepteur (TR) dudit MMIC sont connectés ensemble via lesdits moyens (P1, P2) de manière que le signal haute fréquence soit fourni depuis la face arrière de ladite antenne plane (PA) par lesdits moyens (P1, P2); et dans lequel ladite section à retard de signal (DL) est insérée entre ladite antenne plane (PA) et ledit MMIC et est disposée sur la face arrière de ladite antenne plane (PA), comprend ladite ligne à retard (d) de la section à retard de signal (DL) pour retarder temporairement une transmission ou une réception de signal.

8. Le module radar selon la revendication 7, dans lequel ladite antenne plane de type à balayage (PA) comprend une pluralité d'éléments (P11 à P14, P21 à P24, P31 à P34, P41 à P44) rectangulaires disposés sur le substrat diélectrique (DB), et des moyens de commutation (D1 à D4) pour sélectivement fournir un signal haute fréquence à chacun des éléments (P11 à P14, P21 à P24, P31 à P34, P41 à P44).

9. Le module radar selon la revendication 7 ou 8, dans lequel ladite antenne plane de type à balayage (PA) est une antenne plane de type à balayage à partage de temps.
